# EUROPÄISCHE PATENTSCHRIFT

(11) **EP 1 447 354 B1**
(45) Veröffentlichungstag und Bekanntmachung des Hinweises auf die Patenterteilung: **04.04.2007**
(21) Anmeldenummer: 04000482.2
(22) Anmeldetag: 13.01.2004
(51) Int. Cl.: B65G 1/10, B65G 1/04

(54) **Lagersystem und Lagerverfahren**
Storage system and method
Système et méthode de stockage

(30) Priorität: 14.02.2003 DE 10307232
(43) Veröffentlichungstag der Anmeldung: 18.08.2004
(73) Patentinhaber: SSI Schäfer AG, 8213 Neunkirch (CH)
(72) Erfinder: Schäfer, Gerhard, 57290 Neunkirchen (DE)
(74) Vertreter: Steil, Christian

(56) Entgegenhaltungen:
- EP-A- 1 258 438
- DE-U- 9 406 352
- GB-A- 1 512 396
- GB-A- 2 336 838
- US-A- 4 229 135

## Beschreibung

Die vorliegende Erfindung betrifft ein Lagersystem mit einem Verschieberegallager gemäß dem Oberbegriff des Anspruchs 1 sowie ein Verfahren zum Be- und Entladen eines Verschieberegallagers gemäß dem Oberbegriff des Anspruchs 8.

Verschieberegallager sind im Stand der Technik bekannt. Ein Verschieberegallager weist eine Mehrzahl von parallel zueinander ausgerichteten Regalen auf. Jedes der Regale ist in einer Richtung quer zur Längserstreckung der Regale verschieblich gelagert. Hierdurch ist es möglich, die Regale dann, wenn kein Be- oder Entladevorgang erfolgt, unmittelbar angrenzend aneinander zu positionieren, um so eine sehr hohe Lagerdichte zu erzielen. Bei dem Verschieberegallager ist jeweils eine Lagergasse zwischen zwei Regalen geöffnet, in die eine Person eintreten kann, um einen Be- oder Entladevorgang in den der Gasse benachbarten Regalen durchzuführen.

Verschieberegallager werden häufig von Hand mittels geeigneter Getriebe betätigt. Es sind jedoch auch motorisierte Verschieberegale bekannt, insbesondere im Schwerlastbereich. Bei diesen Lagern ist die Gassenbreite häufig dazu ausgelegt, damit eine Person mit einem Transportfahrzeug, insbesondere einem Stapler, in die Gasse einfahren kann.

Schwerlast-Verschieberegallager können einige Meter hoch sein und einige Tonnen Last tragen. Aus Sicherheitsgründen sind derartige Verschieberegallager mit Lichtschranken und weiteren Sicherheitseinrichtungen versehen, um Gefährdungen von Personen in der geöffneten Lagergasse zu vermeiden. Insbesondere muss eine aus der Lagergasse herausfahrende oder herausgehende Person durch Knopfdruck bestätigen, dass die Lagergasse wieder leer ist, bevor sie aus der Lagergasse herausgeht oder herausfährt.

Eine Übersicht über den Stand der Technik auf dem Gebiet der Verschieberegale lässt sich entnehmen aus der Broschüre "VERSCHIEBEREGALE FÜR PALETTEN- UND LANGGUTLAGERUNG", SSI SCHÄFER, 2001.

Auf dem Gebiet der stehenden, also nicht verschieblichen Regallager, sind verschiedene Ansätze bekannt, um das Be- und Entladen der Regale automatisiert ablaufen zu lassen.

Typischerweise werden hierzu sogenannte Regalbediengeräte verwendet. Bei feststehenden Regallagern ist zwischen jeweils zwei Regalen eine eigene Lagergasse vorzusehen. Derartige Regale haben daher eine geringere Lagerkapazität bei vorgegebenem Bauvolumen.

Das Dokument DE 94 06 352 U1 mit dem Titel "Verschieberegal" offenbart ein Verschieberegal mit parallel zueinander verschiebbaren Regaleinheiten, so dass zwischen benachbarten Regaleinheiten eine Verschieberegal-Bedienungsgasse bereitstellbar ist. Ein Antrieb der verschiebbaren Regaleinheit weist eine Positioniersteuerung auf, um wenigstens zwei Regalgassenbreiten zu erzeugen. Die unterschiedchen Regalgassenbreiten werden für ein schienengebundenes Regalbediengerät sowie ein flurgebundenes, freifahrendes Regalbediengerät, wie zum Beispiel einen Gabelstapler oder dergleichen, benötigt.

Das Dokument GB 1512 396 offenbart ebenfalls ein Verschieberegallager. Verschieberegale sind quer zu ihrer Längsrichtung so verfahrbar, dass zwischen Regalen Regalgassen gebildet werden können. Stirnseitig lässt sich ein Regalbediengerät in die Regalgasse einführen. Das Regalbediengerät wird dabei auf Schienen gehalten, die an den Regalfronten angebracht sind, die die Regalgasse zwischen sich definieren.

Ein ähnliches, regalgeführtes Bediengerät, welches stirnseitig in Regalgassen einfahrbar ist, wird in dem Patent US 4,229,135 offenbart.

Es ist daher die Aufgabe der vorliegenden Erfindung, ein verbessertes Verfahren zum Be- und Entladen eines Lagersystems und ein verbessertes Lagersystem anzugeben, das insbesondere automatisiert betrieben werden kann und eine hohe Kapazität pro Bauvolumen aufweist.

Diese Aufgabe wird durch ein Lagersystem mit den Merkmalen des Anspruchs 1 und durch ein Verfahren gemäß Anspruch 8 gelöst.

Bislang war man davon ausgegangen, dass Verschieberegallager nicht oder wenn, nur unter hohem Aufwand, automatisierbar zu be- und entladen sind. Beispielsweise sind Systeme bekannt, bei denen parallel zur Verfahrrichtung ein festes Schienensystem vorgegeben ist, von dem aus ein Schmalgangstapler in eine jeweils geöffnete Gasse eingeführt wird. Der bauliche Aufwand hierfür ist jedoch beträchtlich.

Durch das erfindungsgemäße System, nämlich die Verwendung von fahrerlosen Transportfahrzeugen in Verbindung mit einem Verschieberegallager, ist es möglich, das Verschieberegallager mittels eines Lagerverwaltungssystems automatisiert zu betreiben, ohne aufwändige Führungssysteme oder ähnliches vorsehen zu müssen.

Unter einem fahrerlosen Transportsystem (FTS) wird im vorliegenden Zusammenhang jede Art von Fahrzeug verstanden, das die Fähigkeit besitzt, eigenständig und ohne Schleppkabel über den Lagerboden fahren zu können. Dies setzt voraus, dass das FTS eine eigene Energieversorgung, beispielsweise in Form eines Akkumulators, und einen eigenen Antriebsmotor aufweist.

Durch diese Maßnahme ist es möglich, nicht nur in das Verschieberegal hineinzufahren, sondern das fahrerlose Transportfahrzeug auch aus der Lagergasse des Verschieberegallagers heraus in eine Lagervorzone und zu einem beliebigen anderen Ort innerhalb des Lagersystems zu fahren.

Hierdurch wird eine besonders hohe Flexibilität erzielt, da die Übergabe von Lagergut aus dem Verschieberegallager an andere Stationen einfacher zu bewerkstelligen ist, als beispielsweise bei dem oben genannten Spezialsystem mit Führungsschiene parallel zur Verschieberichtung.

Von besonderem Vorteil ist es, wenn das fahrerlose Transportfahrzeug ohne Zwangsführung geführt ist.

Dies bedeutet im vorliegenden Sprachgebrauch, dass das fahrerlose Transportfahrzeug nicht nur entlang vorgegebener Zwangsführungen fahren kann, die beispielsweise durch Induktivschleifen im Boden und/oder mechanische Zwangsführungen vorgegeben sein können.

Vielmehr ist das zwangsführungsfreie fahrerlose Transportfahrzeug dazu in der Lage, sich innerhalb des Lagerraums frei zu bewegen, gesteuert durch das Lagerverwaltungssystem bzw. ein untergeordnetes Positioniersystem.

Von besonderem Vorteil ist es, wenn ein räumliches Positioniersystem vorgesehen ist, das sich an Hand von Bezugsmarken in der Fahrebene oder sogar im Raum (also in drei Koordinatenachsen) orientiert. Dabei ist es vorteilhaft, wenn das Positioniersystem lasergesteuert arbeitet.

Auch von besonderem Vorteil ist es, wenn das Positioniersystem räumlich verteilte, stationäre Bezugsmarken aufweist, die im Lagerraum angeordnet sind. Hierdurch ist es möglich, dass sich das fahrerlose Transportfahrzeug über geeignete Kommunikationsmittel wie eine Abtasteinrichtung in Bezug auf die Bezugsmarken orientiert. Diese Orientierung kann in ähnlicher Weise erfolgen wie ein GPS-System, also beispielsweise durch "Triangulation".

Hierdurch ist es möglich, einen festen Bezug zwischen dem Lagerraum, in dem das Lagersystem aufgebaut ist, und dem fahrerlosen Transportsystem herzustellen.

Von besonderem Vorzug ist es, wenn derartige Bezugsmarken zur Orientierung des fahrerlosen Transportfahrzeugs alternativ oder zusätzlich an dem Verschieberegal selbst angebracht sind.

Hierdurch ist es möglich, dass sich das fahrerlose Transportsystem unmittelbar an dem Verschieberegal orientiert. Somit kann die Präzision der Positionierung in der Lagergasse verbessert werden.

Beispielsweise ist es auch möglich, bei einem komplexen Be- und Entladevorgang in der Lagervorzone eine Orientierung des fahrerlosen Transportfahrzeuges über Bezugsmarken in der Lagerhalle und/oder am Lagerboden zu erzielen, und mit dem Einfahren in die geöffnete Lagergasse umzuschalten auf eine Orientierung an Hand von Bezugsmarken an dem Verschieberegal.

Die Orientierung kann dabei in zwei Koordinatenrichtungen erfolgen, also in der Ebene des Lagerbodens. Vorzugsweise erfolgt die Orientierung jedoch auch in der Höhenrichtung, um so automatisiert unterschiedliche Fachböden des Verschieberegals anfahren zu können.

Gegenüber zwangsgeführten fahrerlosen Transportsystemen besteht der erhebliche Vorteil, dass somit auch ein Einfahren in die offenen Gassen von Verschieberegalen möglich ist. Dies war im Stand der Technik bislang unpraktikabel, da sich der Ort der jeweils offenen Gasse ständig änderte und folglich eine Zwangsführung (sei sie induktiv oder mechanisch) nur schwer oder gar nicht zu implementieren war.

Somit war es im Stand der Technik üblich, Verschieberegale ausschließlich manuell anzufahren, entweder durch Bedienpersonen zu Fuß oder durch von einer Bedienperson gefahrene Fahrzeuge wie Stapler (Frontstapler, Schubmaststapler, Schmalgangstapler, Kommissionierfahrzeuge etc.).

Vorteilhaft ist ferner, wenn das Lagersystem eine Übergabeeinheit aufweist.

Von besonderem Vorteil ist es ferner, wenn das Lagerverwaltungssystem dazu ausgelegt ist, in dem Verschieberegal gleichzeitig mehrere Gassen zu öffnen.

Dies war im Stand der Technik nicht praktikabel, da bei manuellem Zugang die Sicherheitsanforderungen zu hoch waren. Mit anderen Worten war die Gefahr bei mehreren offenen Gassen zu hoch, dass ein Personenschaden durch unüberlegtes Öffnen und Schließen von Gassen hervorgerufen wird.

Bei dem automatisierten Lagersystem der vorliegenden Erfindung ist ein Personenschaden jedoch nicht zu befürchten. Daher können die Sicherheitsvorkehrungen erheblich reduziert werden. Durch das gleichzeitige Öffnen mehrerer Gassen kann die Be- und/oder Entladeleistung bzw. Kommissionierleistung erheblich gesteigert werden. Dabei ist das Verhältnis von Lagerkapazität zu Raumvolumen immer noch deutlich höher als bei herkömmlichen stationären Regalen, bei denen quasi immer sämtliche Gassen geöffnet sind.

Dabei ist es von besonderem Vorteil, wenn die maximale Gassenbreite für einen Frontstapler ausgelegt ist. Hierdurch ist es möglich, einen Frontstapler automatisiert (oder auch von Hand) in die maximal geöffnete Gasse einzufahren und einen Be- oder Entladevorgang durchzuführen.

Eine derartige maximale Gassenbreite ermöglicht es jedoch auch, gleichzeitig zwei oder mehr schmalere Gassen zu öffnen, die beispielsweise geeignet sind zum Ein- und Ausfahren eines Schmalgangstaplers. Noch mehr Gassen können dann geöffnet werden, wenn man mit Kommissionierfahrzeugen in die geöffneten Gassen einfährt.

Die obige Aufgabe wird ferner gelöst durch ein Verfahren zum Be- und Entladen eines automatisierten Verschieberegals, mit den Schritten
- Ansteuern des Verschieberegals derart, dass eine bestimmte Gasse geöffnet wird;
- Ansteuern eines fahrerlosen Transportfahrzeuges derart, dass es automatisiert in die geöffnete Gasse einfährt;
- Durchführen eines Be- oder Entladevorganges in den Regalen benachbart zu der geöffneten Gasse; und
- Ausfahren des fahrerlosen Transportfahrzeuges derart, dass es die offene Gasse des Verschieberegals verlässt.

Dabei ist es von besonderem Vorteil, wenn das Verschieberegal anschließend so angesteuert wird, dass eine weitere Gasse geöffnet wird, und wenn das fahrerlose Transportfahrzeug anschließend in die neue Gasse einfährt, um einen weiteren Be- oder Entladevorgang durchzuführen.

Durch diese Maßnahme ist es beispielsweise möglich, Umorganisationen innerhalb des Lagers durchzuführen.

Ferner ist es von Vorteil, wenn mehrere Gassen gleichzeitig geöffnet werden und wenn mehrere fahrerlose Transportfahrzeuge parallel in die geöffneten Gassen einfahren, um parallele Be- und Entladevorgänge durchzuführen.

Gemäß einer weiteren bevorzugten Ausführungsform wird die Breite der geöffneten Gasse bzw. Gassen dynamisch an das jeweils zum Einfahren vorgesehene Transportfahrzeug angepasst.

Hierdurch kann die Be- und/oder Entladeleistung bzw. Kommissionierleistung nochmals erheblich gesteigert werden.

Ferner ist es von Vorteil, wenn das Transportfahrzeug bzw. die Transportfahrzeuge gegeneinander, gegen das Verschieberegal und gegen Personen mit Anti-Kollisionseinrichtungen versehen sind, damit die Anlage wahlweise voll-manuell, voll-automatisch oder hybrid bzw. gemischt betrieben werden kann.

Hierdurch wird die Variabilität des Lagersystems nochmals erhöht.

Ausführungsbeispiele der Erfindung sind in der Zeichnung dargestellt und werden in der nachfolgenden Beschreibung näher erläutert. Es zeigen:
- Fig. 1: eine schematische Draufsicht auf ein erfindungsgemäßes Lagersystem;
- Fig. 2: eine schematische Seitenansicht des in Fig. 1 gezeigten Lagersystems;
- Fig. 3: eine Abwandlung des Lagersystems der Fig. 1 mit vergrößerter Gangbreite; und
- Fig. 4: das Lagersystem der Fig. 3 mit zwei geöffneten Gassen unterschiedlicher Breite.

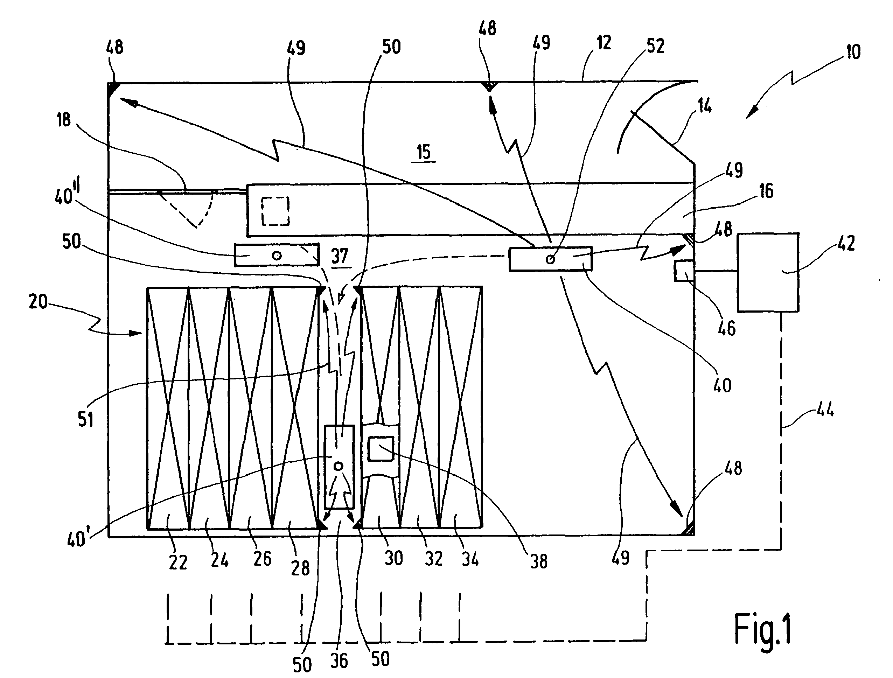

In Fig. 1 ist ein erfindungsgemäßes Lagersystem generell mit 10 bezeichnet.

Das Lagersystem 10 ist in einer Lagerhalle 12 aufgestellt, die über eine Tür 14 zugänglich ist.

Über die Tür 14 gelangt man in einen Vorraum 15, der von dem eigentlichen Lagerraum durch eine Übergabeeinheit 16 abgetrennt ist. Die Übergabeeinheit 16 kann von einem beliebigen Typ sein, beispielsweise ein Förderband, ein Rollenband, ein Kommissionierplatz oder ähnliches.

Der Lagerraum ist über eine Sicherheitstür 18 von dem Vorraum 15 aus zugänglich.

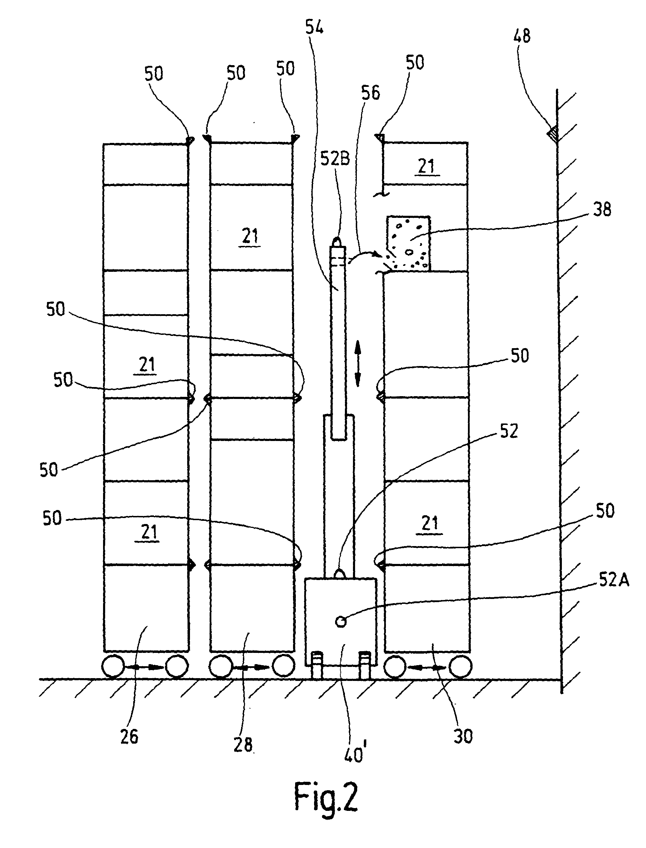

In dem Lagerraum ist ein Verschieberegallager 20 angeordnet, das eine Mehrzahl von Verschieberegalen 22 - 34 aufweist. Jedes der Regale weist eines oder mehrere übereinander angeordnete und nebeneinander angeordnete Fächer 21 auf (vgl. Fig. 2).

Die Regale 22 - 34 des Verschieberegallagers 20 sind einzeln motorisch verfahrbar (gegebenenfalls auch über eine Kopplung in Gruppen verfahrbar).

In der Darstellung der Fig. 1 sind aus Gründen einer übersichtlicheren Darstellung lediglich einige Verschieberegale 22 - 34 gezeigt. Üblicherweise erstreckt sich das Verschieberegallager 20 jedoch von einer Seitenwand der Halle 12 zur gegenüberliegenden Seitenwand.

Das Verschieberegallager 20 ist so konstruiert, dass in an sich bekannter Weise eine Lagergasse 36 jeweils geöffnet ist. Von der Lagergasse 36 aus sind die benachbarten Regale zugänglich (im vorliegenden Fall die zur Gasse 36 weisenden Hälften der Regale 28, 30).

Durch Verschieben einzelner Regale oder von Gruppen von Regalen kann die aktuelle Lagergasse 36 geschlossen und eine andere Lagergasse an beliebiger Stelle zwischen zwei Regalen geöffnet werden.

Zwischen dem Verschieberegallager 20 und der Übergabeeinheit 16 ist eine Lagervorzone 37 eingerichtet.

In den Verschieberegalen 22 - 34 lagert Lagergut, wie es schematisch bei 38 gezeigt ist. Trotz der Darstellung der Fig. 1, wonach das Lagergut sich über die gesamte Regaltiefe erstreckt, ist es üblich, dass das Lagergut jeweils sich nur bis zur halben Regaltiefe erstreckt und die andere Seite des jeweiligen Regals über eine andere Gasse 36 zugänglich ist.

In der Lagervorzone 37 ist ein fahrerloses Transportfahrzeug 40 gezeigt.

Das fahrerlose Transportfahrzeug 40 weist einen eigenen Antrieb und einen eigenen Energiespeicher auf, beispielsweise einen Elektromotor in Verbindung mit einem Akkumulator.

Daher kann das fahrerlose Transportfahrzeug 40 sich in der Lagervorzone 37 ohne Schleppkabel oder ähnliches frei bewegen.

Das Lagersystem 10 weist ferner ein Lagerverwaltungssystem 42 auf, das auch außerhalb der Halle 14 angeordnet sein kann.

Das Lagerverwaltungssystem 42 ist mit den Motoren der Verschieberegale 22 - 34 verbunden, wie es schematisch bei 44 gezeigt ist.

Demzufolge können die Regale 22 - 34 mittels des Lagerverwaltungssystems 42 automatisiert verschoben werden.

Bei 46 ist eine Steuerung gezeigt, die drahtlos, z.B. per Funk oder IR, mit dem fahrerlosen Transportfahrzeug 40 in Verbindung steht und über das Lagerverwaltungssystem 42 betrieben wird.

Die Steuerung 46 dient dazu, den Motor und die Lenkung des fahrerlosen Transportfahrzeugs 40 anzusteuern, so dass dieses sich gemäß den Vorgaben durch das Lagerverwaltungssystem 42 bewegt.

Das fahrerlose Transportfahrzeug 40 wird dabei ohne jede Zwangsführung bewegt. D.h., der Boden der Halle 14 weist keine induktiven Leiterschleifen zur Zwangsführung auf. Ferner sind keine mechanischen Zwangsführungsmittel wie Schienen oder dergleichen vorgesehen.

Um dennoch eine präzise Führung des fahrerlosen Transportfahrzeuges 40 zu ermöglichen, sind Mittel zur Positionserfassung des fahrerlosen Transportfahrzeugs 40 vorgesehen.

Zu diesem Zweck sind in der Lagerhalle 12 verteilt Bezugsmarken 48 festgelegt, die über schematisch angedeutete Kommunikationsstrecken von Positioniermitteln 52 des fahrerlosen Transportfahrzeugs 40 detektiert werden.

Bei der Positioniereinrichtung kann es sich beispielsweise um eine Laserführung an sich bekannter Art handeln. Eine derartige Laserführung kann beispielsweise so aufgebaut sein, dass ein Laserstrahl die Lagerhalle abscannt und die Relativlage der Bezugsmarken 48 zur Lage des Fahrzeugs 40 erfasst.

In ähnlicher Weise könnte das fahrerlose Transportsystem auch ein Radarsignal oder eine sonstige elektromagnetische Welle abstrahlen, die von den Bezugsmarken 48 reflektiert wird. Durch Doppler-Berechnung oder ähnliches kann dann die Entfernung zwischen dem Fahrzeug 40 und der jeweiligen Bezugsmarke 48 berechnet werden. Das Erfassen von mehreren Bezugsmarken 48 (in der Regel wenigstens zwei, vorzugsweise jedoch drei Bezugsmarken 48) kann die relative Lage des Fahrzeugs 40 zur Halle 12 bestimmt werden.

Mit anderen Worten erlaubt die Positioniereinrichtung, dass die genaue Lage in der Ebene der Lagerhalle 12 festgestellt wird. Diese Lage wird über eine drahtlose Kommunikation mit der Steuerung 46 und damit zu dem Lagerverwaltungssystem 42 übertragen. Demzufolge kann der Fahrweg des Fahrzeugs 40 über die Positionserfassung rückgekoppelt geregelt werden.

Hierdurch ist eine sehr hohe Präzision der Führung des Fahrzeugs 40 möglich.

Die Verteilung der Bezugsmarken 48 kann so sein, dass das Fahrzeug 40 an jedem Ort innerhalb der Halle 12 seine Position exakt erfassen kann, auch innerhalb jeder geöffneten Gasse 36.

Bei der vorliegenden Ausführungsform ist jedoch vorgesehen, dass auch an den Regalen 22 - 34 jeweils Bezugsmarken 50 zur Positionserfassung des Fahrzeugs 40 angebracht sind, wie es schematisch bei 50 gezeigt ist.

Somit kann das Fahrzeug 40 innerhalb der Gasse 36 seine Position relativ zu den benachbarten Regalen (in der Darstellung der Fig. 1 die Regale 28, 30) exakt bestimmten. Hierdurch kann die Positionierung des Fahrzeugs 40 in Bezug auf die Regale exakter erfolgen.

Dabei kann die Positionsbestimmung beispielsweise bei der Einfahrt des Fahrzeugs 40 in die Gasse 36 umgeschaltet werden zwischen Positionserfassung relativ zur Halle 12 (über die Bezugsmarken 48) in eine Positionserfassung relativ zu den benachbarten Regalen 28, 30 (über die Bezugsmarken 50).

Beim Ausfahren aus der Gasse 36 erfolgt wiederum eine Umschaltung auf die Bezugsmarken 48.

Da somit die Lage des Fahrzeugs 40 exakt (in der Größenordnung von wenigen Millimetern) in Bezug auf die jeweils benachbarten Regale geregelt werden kann, ist ein automatisches Be- und Entladen von Lagergut 38 in die Regale bzw. aus den Regalen möglich, obgleich die Lagetoleranzen des Verschieberegallagers 20 sehr viel höher sein können, insbesondere bei Schwerlast-Verschieberegallagern.

Wie es in Fig. 2 gezeigt ist, weist das fahrerlose Transportfahrzeug 40 einen Mehrfachmast 54 auf, um Fächer 21 unterschiedlicher Höhe anfahren zu können.

Das Ausfahren des Mehrfachmastes 54 kann über eine einfache Steuerung erfolgen, indem ausgehend von einer Nullposition die verschiedenen Fachhöhen aus einer in einem Speicher abgelegten Tabelle geholt und der Mast 54 anschließend entsprechend dieses Wertes ausgefahren wird. Dies entspricht einer einfachen Steuerung.

In der vorliegenden Ausführungsform sind jedoch die Lagerbezugsmarken 50 auch in Bezug auf die Höhe des Lagers 20 verteilt angeordnet, so dass auch die Lage des Mehrfachmastes 54 (bzw. dessen Ausfahrlänge) rückgekoppelt über dessen Positionserfassung geregelt werden kann.

Hierzu ist gezeigt, dass das obere Ende des Mehrfachmastes 54 mit weiteren Positioniermitten 52B versehen sein kann, über die eine exakte Lagebestimmung des Mehrfachmastes 54 erfolgen kann. Demzufolge lässt sich mit der Positioniereinrichtung des Lagersystems 10 jedes einzelne Fach 21 über eine Lageregelung anfahren.

Da, wie oben gesagt, hierbei sehr hohe Genauigkeiten erzielbar sind, sind keine weiteren Zwangsführungen zum Einfädeln in Palettenlöcher, Behälteröffnungen oder dergleichen erforderlich.

Im vorliegenden Fall ist das fahrerlose Transportfahrzeug 40 als Kommissionierfahrzeug ausgelegt.

Das Lagergut 38 ist ein Behälter mit Kommissioniergut, wie es schematisch in Fig. 2 gezeigt ist. Durch eine nur schematisch angedeutete Pickeinrichtung 56 kann das Fahrzeug 40 jeweils einzelne Stückgüter (beispielsweise Medikamentenschachteln oder ähnliches) aus der Lagerbox 38 entnehmen und zur Übergabeeinheit 16 zur weiteren Kommissionierung verbringen.

In Fig. 2 ist ferner gezeigt, dass auch an einer Vorderseite des Fahrzeugs 40 weitere Positioniermittel 52A angeordnet sein können, zur weiteren Erhöhung der Genauigkeit der Positionserfassung.

Das Lagerverwaltungssystem 42 ist ferner dazu ausgelegt, die Belegung der einzelnen Fächer 21 des Lagers 20 zu speichern.

Das Lagersystem 10 wird beispielsweise wie folgt betrieben.

Auf einen Kommissionierauftrag hin errechnet das Lagerverwaltungssystem 42 zunächst den Ort des zu kommissionierenden Lagergutes. Anschließend wird das Verschieberegallager 20 so angesteuert, dass jene Gasse 36 geöffnet wird, über die das zu kommissionierende Gut angefahren werden kann. Gleichzeitig wird das fahrerlose Transportsystem 40 in Bewegung versetzt, so dass es in die geöffnete Gasse 36 einfährt. Dann wird auf Positionierung an Hand der Bezugsmarken 50 umgeschaltet. Das Fahrzeug 40 bewegt sich entlang der Gasse 36, bis es vor dem zu kommissionierenden Behälter 38 steht. Gleichzeitig hiermit oder hiernach wird der Mehrfachmast 54 auf die geeignete Höhe ausgefahren. Die Pickeinrichtung 56 holt das zu kommissionierende Lagergut aus dem Behälter 38, und anschließend wird der Mast 54 wieder eingefahren, und das Fahrzeug 40 bewegt sich aus der Lagergasse 36 hin zu der Lagervorzone 37. Dann wird wieder auf Lageregelung über die Hallenbezugsmarken 48 umgeschaltet. Anschließend fährt das Fahrzeug 40, gesteuert über das Lagerverwaltungssystem 42, zu der Übergabeeinheit 16 und übergibt das zu kommissionierende Lagergut zur weiteren Kommissionierung.

In Leerlaufphasen, wenn also keine Kommissionieraufträge anliegen, kann das Lagersystem 10 auch so betrieben werden, dass die Lagerbelegung automatisiert optimiert wird, um anschließend ein optimiertes Ein- und Auslagern zu ermöglichen. Hierbei kann das Fahrzeug 40 in eine Gasse 36 einfahren, einen Behälter 38 holen und wieder aus der Gasse 36 herausfahren. Anschließend wird der Behälter 38 in ein anderes Regal abgelegt, beispielsweise in einer anderen Gasse, von wo künftige Kommissionieraufgaben leichter erfüllt werden können.

Ferner können Leerlaufphasen auch zum Wiederauffüllen des Lagers 20 verwendet werden. Auch dies kann automatisiert erfolgen, beispielsweise über die Übergabeeinheit 16.

Es versteht sich, dass das Lagerverwaltungssystem 42 für die verschiedensten Kommissionieraufgaben ausgelegt sein kann, beispielsweise auch für belegloses Kommissionieren. Die Lagerhaltung kann chaotisch sein.

Der Darstellung der Ausführungsform der Fig. 1 und 2 lässt sich ferner entnehmen, dass vorhandene Verschieberegallager vergleichsweise einfach auf das erfindungsgemäße Lagersystem 10 umgerüstet bzw. nachgerüstet werden können. Hierzu bedarf es lediglich einer geeigneten Verbindung der Motoren des Regals 20 mit einem Lagerverwaltungssystem 42 und des Bereitstellens von Bezugsmarken 48, 50, um fahrerlose Transportfahrzeuge 40 frei beweglich innerhalb der Halle 12 verfahren zu können.

Bei Neuanlagen ist zwar der Aufwand für die Verbindung der Motoren des Regals 20 mit dem Lagerverwaltungssystem 42 und das Bereitstellen der Bezugsmarken 48, 50 etwas höher als bei klassischen Verschieberegalen. Dafür kann gegenüber herkömmlichen, manuell zugänglichen Verschieberegalen eine erhebliche Einsparung hinsichtlich der Sicherheitsmaßnahmen getroffen werden. Beispielsweise sind keine Lichtschranken und Freigabetasten erforderlich.

Obgleich oben beschrieben ist, dass die Bezugsmarken 48, 50 passiv sind und ein Signal der Positioniermittel 52 reflektieren, versteht sich, dass deren Eigenschaften auch vertauscht werden können. Beispielsweise können die Bezugsmarken 48, 50 als aktive Sender ausgelegt sein und mit dem Lagerverwaltungssystem 42 verbunden sein. In diesem Fall wäre eine reflektierende Bezugsmarke lediglich an dem fahrerlosen Transportfahrzeug 40 vorgesehen.

Ferner versteht sich, dass auch Kombinationen derartiger Lageerfassungsmittel implementiert werden können.

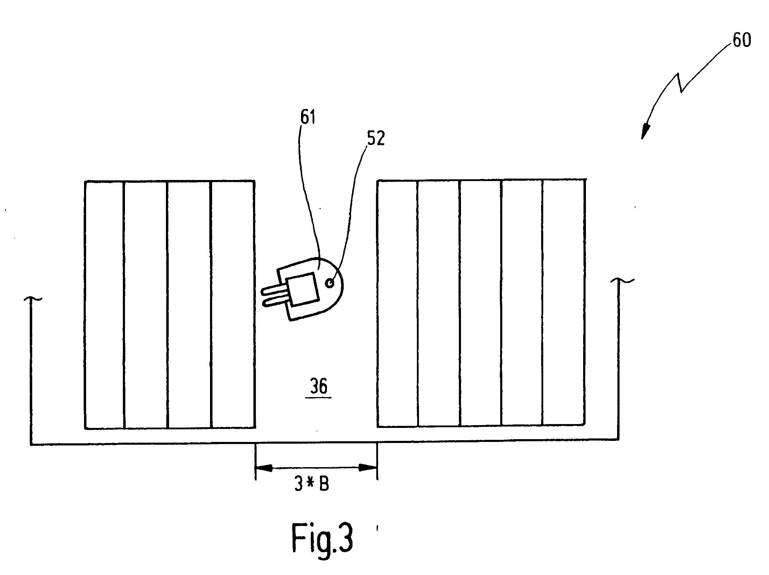

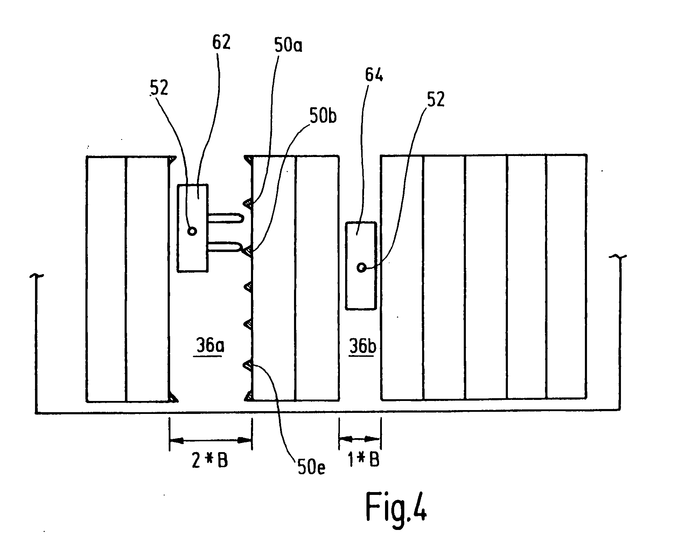

Fig. 3 und 4 zeigen eine weitere bevorzugte Ausführungsform eines Lagersystems 60.

Das Lagersystem 60 ist dem Grunde nach genauso aufgebaut wie das Lagersystem 10.

Im Unterschied hierzu ist die Breite der Gasse 36 so gewählt, dass auch ein Frontstapler in die Gasse 36 einfahren kann, um Paletten aus dem Lager zu holen oder dort einzulagern.

Die Breite der Gasse 36 entspricht dabei beispielsweise einer dreifachen Elementarbreite B.

In Fig. 4 ist nun gezeigt, dass das Verschieberegallager mittels des Lagerverwaltungssystems 42 auch so angesteuert werden kann, dass nicht nur eine Gasse 36 geöffnet wird, sondern zwei Gassen 36a, 36b.

Demzufolge ist es bei diesem Lagersystem 60 möglich, dass zwei fahrerlose Transportfahrzeuge gleichzeitig in das Verschieberegallager einfahren und unabhängig voneinander Ein- und Auslagervorgänge vornehmen.

In der Darstellung der Fig. 4 ist gezeigt, dass zwei Gassen 36a, 36b geöffnet sind, von denen die Gasse 36a eine Breite 2B besitzt und die Gasse 36b die Breite B.

In der Gasse 36a ist es demzufolge möglich, Schmalgangstapler einfahren zu lassen, wie es schematisch bei 62 gezeigt ist.

In der Gasse 36b mit der Elementarbreite B können hingegen Kommissionierfahrzeuge 64 einfahren, die dem Kommissionierfahrzeug 40 der Fig. 1 und 2 entsprechen.

In gleicher Weise ist es natürlich möglich, bei dem Lagersystem 60 drei Gassen zu öffnen, die jeweils die Elementarbreite B besitzen. Demzufolge können dann drei Kommissionierfahrzeuge gleichzeitig Kommissioniervorgänge in dem Lagersystem 60 vornehmen.

Es versteht sich, dass die Anzahl der zu öffnenden Gassen beliebig sein kann. Sie sollte jedoch kleiner sein als N - 1, wenn N gleich der Anzahl der Regale ist.

Bei dem Lagersystem 60 der Fig. 3 und 4 ist es somit möglich, mit unterschiedlichen Fahrzeugen (Frontstapler 61, Schmalgangstapler 62 und Kommissionierfahrzeug 64) in das Verschieberegal einzufahren und Ein- und Auslagerungsvorgänge vorzunehmen.

In gleicher Weise kann das Lagersystem 60 jedoch auch so konzipiert werden, dass nur ein Fahrzeugtyp verwendet wird, wobei jedoch gleiche Fahrzeugtypen gleichzeitig in das Verschieberegal einfahren und ausfahren können.

Insgesamt kann so die Kommissionier- bzw. Ein- und Auslagerleistung signifikant gesteigert werden.

Die Anzahl der gleichzeitig zu öffnenden Gassen hängt maßgeblich von der jeweiligen Anwendung ab.

In Fig. 4 ist ferner gezeigt, dass über die Länge einer Gasse 36a auch eine Mehrzahl von Bezugsmarken 50a bis 50e verteilt angeordnet sein können.

Hierdurch ist es möglich, Bodenungenauigkeiten auszugleichen, die möglicherweise an dem Hallenboden vorhanden sind.

## Patentansprüche

1. Lagersystem zum Lagern von Lagergut (38), mit
- einem Verschieberegallager (20) mit einer Mehrzahl von Verschieberegalen (22-34) mit Lagerplätzen zum Lagern des Lagergutes (38), wobei die Verschieberegale (20) motorisch verfahrbar sind,
- einem Lagerverwaltungssystem (42), das dazu ausgelegt worden ist, das Verschieberegallager (20) anzusteuern, derart, dass zum Be- und Entladen wenigstens eine Lagergasse an einer beliebigen Stelle zwischen zwei Verschieberegalen (22-34), geöffnet wird, und
- wenigstens einem fahrerlosen Transportfahrzeug (40), das mittels des Lagerverwaltungssystems (42) geführt wird, um in eine Gasse des Verschieberegallagers (20) einzufahren, die vorab mittels des Lagerverwaltungssystems (42) geöffnet worden ist, **dadurch gekennzeichnet, dass**
das fahrerlose Transportfahrzeug (40) mittels eines räumlichen Positioniersystems zwangsführungsfrei geführt wird, so dass es zu einem beliebigen Ort innerhalb des Lagersystems verfahrbar ist.

2. Lagersystem nach Anspruch 1, wobei das fahrerlose Transportfahrzeug (40) mittels eines lasergesteuerten Positioniersystems geführt wird.

3. Lagersystem nach Anspruch 1 oder 2, wobei das räumliche Positioniersystem räumlich verteilte, stationäre Bezugsmarken (48, 50) aufweist, die von einer Abtasteinrichtung des fahrerlosen Transportfahrzeuges (40) erfassbar sind, um so die Position des fahrerlosen Transportfahrzeuges (40) innerhalb des Lagersystems (10) zu bestimmen und dessen Fahrtrichtung zu regeln.

4. Lagersystem nach Anspruch 3, wobei wenigstens einige Bezugsmarken (50) an dem Verschieberegal (20) angebracht sind.

5. Lagersystem nach einem der Ansprüche 1 bis 4, wobei das Lagersystem (10) eine Übergabeeinheit (16) aufweist, die entfernt von dem Verschieberegallager angeordnet ist, und wobei das fahrerlose Transportfahrzeug (40) so angesteuert werden kann, dass es Lagergut von der Übergabeeinheit (16) in das Verschieberegallager (20) überführen kann und umgekehrt.

6. Lagersystem nach einem der Ansprüche 1 bis 5, wobei das Lagerverwaltungssystem (42) und das Verschieberegallager (20) dazu ausgelegt sind, mehrere Gassen des Verschieberegallagers (20) gleichzeitig zu öffnen.

7. Lagersystem nach Anspruch 6, wobei das Verschieberegallager (20) eine maximale Gassenbreite aufweist, die für ein fahrerloses Transportfahrzeug (40) eines breiten Typs, insbesondere eines Frontstaplers, ausgelegt ist, wobei bei Öffnung mehrerer Gassen Fahrzeuge eines anderen, schmaleren Typs von fahrerlosem Transportfahrzeug gleichzeitig in die geöffneten Lagergassen einfahren können, insbesondere Schmalgangstapler und/oder Kommissionierfahrzeuge.

8. Verfahren zum Be- und Entladen eines automatisierten Lagersystems nach einem der Ansprüche 1 bis 7 mit den Schritten
- Ansteuern des Verschieberegallagers (20) derart, dass eine bestimmte Gasse geöffnet wird;
- Ansteuern eines zwangsführungsfreien fahrerlosen Transportfahrzeuges (40) derart, dass es automatisiert in die geöffnete Gasse des Verschieberegallagers (20) einfährt;
- Durchführen eines Be- und/oder Entladevorgangs durch das fahrerlose Transportfahrzeug (40) in der geöffneten Lagergasse; und
- Ansteuern des fahrerlosen Transportfahrzeuges (40) derart, dass es aus der geöffneten Gasse ausfährt.

9. Verfahren nach Anspruch 8, wobei nach dem Ausfahren des fahrerlosen Transportfahrzeuges (40) eine andere Gasse geöffnet wird und das fahrerlose Transportfahrzeug (40) so angesteuert wird, dass es in die andere Gasse einfährt, um dort einen weiteren Be- und/oder Entladevorgang durchzuführen.

10. Verfahren nach Anspruch 8 oder 9, wobei das Verschieberegallager (20) so angesteuert wird, dass mehrere Gassen gleichzeitig geöffnet werden, und wobei mehrere fahrerlose Transportfahrzeuge (40) gleichzeitig angesteuert werden, in die geöffneten Gassen einzufahren, um dort jeweils einen Be- und/oder Entladevorgang durchzuführen.

11. Verfahren nach einem der Ansprüche 8 bis 10, wobei die Breite der geöffneten Gasse bzw. Gassen dynamisch an das jeweils zum Einfahren vorgesehene Transportfahrzeug angepasst wird.

12. Verfahren nach einem der Ansprüche 8 bis 11, wobei das Transportfahrzeug (40) bzw. die Transportfahrzeuge (40) gegeneinander, gegen das Verschieberegal und gegen Personen mit Anti-Kollisionseinrichtungen versehen sind, damit die Anlage wahlweise voll-manuell, voll-automatisch oder hybrid bzw. gemischt betrieben werden kann.

## Claims

1. A warehouse system for storing storage goods (38) comprising
- a mobile rack storage (20) having a plurality of mobile racks (22-34) comprising storage compartments for storing the storage goods (38), wherein the mobile racks (20) can be moved by a motor,
- a warehouse management system (42) being adapted to control the mobile rack storage (20) such that at least one warehouse aisle is opened at an arbitrary location between two mobile racks (22-34) for storing and retrieving, and
- at least one driverless transport vehicle (40), which is guided by means of the warehouse management system (42), for driving into an aisle of the mobile rack storage (20) which has been opened in advance by means of the warehouse management system (42), **characterized in that**
the driverless transport vehicle (40) is guided by means of a spatial positioning system without restricted guidance such that it is movable to an arbitrary place within the warehouse system.

2. The warehouse system of claim 1, wherein the driverless transport vehicle (40) is guided by means of a laser controlled positioning system.

3. The warehouse system of claim 1 or 2, wherein the spatial positioning system comprises spatially distributed stationary reference marks (48), 50) which are detectable by a scanning device of the driverless transport vehicle (40) so as to determine the position of the driverless transport vehicle (40) within the warehouse system (10) and to regulate a travel direction thereof.

4. The warehouse system of claim 3, wherein at least some reference marks (50) are mounted on the mobile rack (20).

5. The warehouse system of any of claims 1 to 4, wherein the warehouse system (10) includes a transfer unit (16) which is arranged remote from the mobile rack storage, and wherein the driverless transport vehicle (40) is controllable such that storage good can be taken through the transfer unit (16) into the mobile rack storage (20), and vice versa.

6. The warehouse system of any of claims 1 to 5, wherein the warehouse management system (42) and the mobile rack storage (20) are adapted to open several aisles of the mobile rack storage (20) simultaneously.

7. The warehouse system of claim 6, wherein the mobile rack storage (20) comprises a maximum aisle width which is adapted to a broad type driverless transport vehicle (40), particularly a front stacker, wherein when several aisles are opened vehicles of another smaller type of driverless vehicles simultaneously can drive into the opened warehouse aisles, particularly turret trucks and/or order picking vehicles.

8. A method for storing and retrieving in an automated warehouse system of one of claims 1 to 7 comprising the steps of:
- controlling the mobile rack storage (20) such that a particular aisle is opened;
- controlling a driverless transport vehicle (40) without restricted guidance such that it drives automated into the opened aisle of the mobile rack storage (20);
- performing a storing and/or retrieving process with the driverless transport vehicle (40) within the opened warehouse aisle; and
- controlling the driverless transport vehicle (40) such that it drives out of the opened aisle.

9. The method of claim 8, wherein after the driverless transport vehicle (40) is driven out another aisle is opened, and the driverless transport vehicle (40) is controlled such that it drives into another aisle, in order to perform another storing and/or retrieving process there.

10. The method of claim 8 or 9, wherein the mobile rack storage (20) is controlled such that several aisles are opened simultaneously, and wherein several driverless transport vehicles (40) are simultaneously controlled for driving into the opened aisles, in order to respectively perform a storing and/or retrieving process there.

11. The method of one of claims 8 to 10, wherein the width of the opened aisle (s) is dynamically adapted to each of the transport vehicles designated to drive in.

12. The method of one of claims 8 to 11, wherein the transport vehicle (40) and the transport vehicles (40), respectively, are mutually provided with anticollision means against the mobile rack and against personnel for allowing to operate the system selectively in an entire manual manner, in an entire automated manner or in a hybrid or mixed manner.

## Revendications

1. Système de stockage pour le stockage de marchandises à stocker (38), comprenant
- un support de rayonnages coulissants (20) avec une pluralité de rayonnages coulissants (22-34) avec des emplacements de stockage pour le stockage de marchandises à stocker (38), les rayonnages coulissants (20) pouvant être déplacés par moteur,
- un système de gestion de stock (42), qui a été conçu pour actionner le support de rayonnages coulissants (20) de telle sorte que, pour le déchargement et le chargement, on ouvre au moins une allée de stockage en un endroit quelconque entre deux rayonnages coulissants (22-34), et
- au moins un véhicule de transport (40) sans conducteur, qui est guidé au moyen du système de gestion de stock (42), afin d'entrer dans une allée de stockage du support de rayonnages coulissants (20), qui a été ouverte auparavant au moyen du système de gestion de stock (42), **caractérisé en ce que**
le véhicule de transport (40) sans conducteur est guidé sans guidage forcé au moyen d'un système de positionnement dans l'espace, de sorte qu'il peut être déplacé en un endroit quelconque à l'intérieur du système de stockage.

2. Système de stockage selon la revendication 1, le véhicule de transport (40) sans conducteur étant guidé au moyen d'un système de positionnement commandé par laser.

3. Système de stockage selon la revendication 1 ou 2, le système de positionnement dans l'espace présentant des repères de référence (48, 50), fixes et répartis dans l'espace, qui peuvent être détectés par un dispositif de balayage du véhicule de transport (40) sans conducteur, afin de déterminer ainsi la position du véhicule de transport (40) sans conducteur à l'intérieur du système de stockage (10) et de régler son sens de marche.

4. Système de stockage selon la revendication 3, au moins quelques repères de référence (50) étant placés sur les rayonnages coulissants (20).

5. Système de stockage selon l'une quelconque des revendications 1 à 4, le système de stockage (10) présentant une unité de remise (16), qui est disposée à distance du support de rayonnages coulissants, et le véhicule de transport (40) sans conducteur pouvant être activé de telle sorte qu'il peut transférer les marchandises à stocker de l'unité de remise (16) au support de rayonnages coulissants (20) et inversement.

6. Système de stockage selon l'une quelconque des revendications 1 à 5, le système de gestion de stock (42) et le support de rayonnages coulissants (20) étant conçus pour ouvrir simultanément plusieurs allées du support de rayonnages coulissants (20).

7. Système de stockage selon la revendication 6, le support de rayonnages coulissants (20) présentant une largeur d'allée maximale qui est conçue pour un véhicule de transport (40) sans conducteur d'un type large, en particulier d'un gerbeur frontal, des véhicules d'un autre type plus étroit de véhicule de transport sans conducteur pouvant être entrés simultanément dans les allées de stockage ouvertes en cas d'ouverture de plusieurs allées, en particulier des gerbeurs à passage étroit et/ou des véhicules de préparation de commande.

8. Procédé pour le déchargement et le chargement d'un système de stockage automatisé selon l'une quelconque des revendications 1 à 7, comprenant les étapes suivantes
- commande du support de rayonnages coulissants (20) de telle sorte qu'une allée définie est ouverte,
- activation d'un véhicule de transport (40) sans conducteur, exempt de guidage forcé, de telle sorte qu'il entre de façon automatisée dans l'allée ouverte du support de rayonnages coulissants (20) ;
- exécution d'une opération de chargement et/ou déchargement par le véhicule de transport (40) sans conducteur dans l'allée de stockage ouverte, et
- activation du véhicule de transport (40) sans conducteur de telle sorte qu'il sort de l'allée ouverte.

9. Procédé selon la revendication 8, une autre allée étant ouverte après la sortie du véhicule de transport (40) sans conducteur et le véhicule de transport (40) sans conducteur étant commandé de telle sorte qu'il entre dans l'autre allée pour y effectuer une autre opération de chargement et/ou de déchargement.

10. Procédé selon la revendication 8 ou 9, le support de rayonnages coulissants (20) étant activé de telle sorte que plusieurs allées sont ouvertes en même temps, et plusieurs véhicules de transport (40) sans conducteur étant activés simultanément, afin d'entrer dans les allées ouvertes pour y effectuer à chaque fois une opération de chargement et/ou de déchargement.

11. Procédé selon l'une quelconque des revendications 8 à 10, la largeur de l'allée ou des allées ouvertes étant adaptée de façon dynamique au véhicule de transport prévu à chaque fois pour l'entrée.

12. Procédé selon l'une quelconque des revendications 8 à 11, le véhicule de transport (40) ou les véhicules de transport (40) étant dotés de dispositifs anticollision les uns par rapport aux autres, contre les rayonnages coulissants et contre les personnes, pour que l'installation puisse être exploitée au choix de façon entièrement manuelle, entièrement automatique ou de façon hybride ou mixte.
